# EUROPEAN PATENT SPECIFICATION

(11) **EP 2 462 357 B1**
(45) Date of publication and mention of the grant of the patent: **31.08.2016**
(21) Application number: 09845634.6
(22) Date of filing: 04.06.2009
(51) Int. Cl.: F16C 11/02, F16D 1/097

(54) **THROUGH PIN ASSEMBLY FOR AN AXLE**
DURCHGANGSSTIFTANORDNUNG FÜR EINE ACHSE
ENSEMBLE BROCHE TRAVERSANTE POUR UN AXE

(43) Date of publication of application: 13.06.2012
(73) Proprietor: Expander Americas, Inc., Cottonwood, AZ 86326 (US)
(72) Inventor: SVENSSON, Roger, Sedona AZ 86336 (US); CARLSSON, Anders, S-59725 Atvidaberg (SE); SVENSSON, Everth, S-59750 Atvidaberg (SE)
(74) Representative: Banzer, Hans-Jörg
(86) International application number: PCT/US2009/046217
(87) International publication number: WO 2010/141018

(56) References cited:
- DE-A1- 10 309 792
- US-A- 2 241 506
- US-A- 3 600 015
- US-A- 5 209 594
- US-A- 5 551 794
- US-A1- 2009 116 897

## Description

### FIELD OF THE INVENTION

This invention relates generally to an arrangement for locking a shaft into a pair of mounting cheeks and stabilizing a machine member, and, more specifically, to an arrangement for locking a shaft or an axle into a pair of mounting cheeks and stabilizing a machine member where only one end of the shaft need be accessible in order to clamp or lock the shaft into a pair of mounting cheeks and to stabilize the machine member.

### BACKGROUND OF THE INVENTION

The conventional way to achieve pivotability in a connection between two machine parts is to use a hinge journalled in bearings, comprising one or more bearings arranged on a shaft/axle (hereinafter axle) which is fixed in between a pair of mounting cheeks or the like on one of the machine parts. The inner race of the bearing or bearings is disposed on the axle and, possibly with the aid of distancing rings, bridges the distance between the fixing cheeks, while the outer race of the bearing or bearings is effectively connected to the second machine part. Since relative movement between the inner bearing race and the axle produces progressively increasing wear resulting in excessive play and perhaps fracture of the axle, the race has to be fixed relative to the axle by means of nuts screwed onto each of the respective axle ends. It is important that the nuts are tightened just the right amount, since excessive tightening may jeopardize the attachment of the mounting cheeks, and excessive play may arise as a result of insufficient tightening, with the results mentioned above

One drawback with the above locking arrangement is that locking is effected through the medium of two nuts mounted on respective ends of the axle. When the axle is located in a confined space, it is difficult to reach the nuts on both ends of the axle in order to tighten the same.

Therefore, a need existed to provide a system and method to overcome the above problem. The system and method would provide an improved arrangement for locking an axle into a pair of mounting cheeks and stabilizing a machine member where solely one end of the axle need be accessible in order to clamp or lock the axle into a pair of mounting cheeks and stabilize the machine member

Prior art systems trying to solve the above mentioned problem are known from DE 103 09 792 A1 and US 5,551,794 A.

### SUMMARY OF THE INVENTION

A through pin assembly for securing an axle into a pair of mounting cheeks and to stabilize a machine member is disclosed. The through pin assembly for securing an axle to a pair of mounting lugs and stabilizing a machine member has an axle having a first end and a second end. A channel is formed through the axle and runs a length of the axle. The axle has a groove formed in each end of the channel as a seat for a gasket to seal off a lubrication chamber for distribution to the bearing. A bearing is mounted on a central section of the axle. A pair of expansion sleeves is provided wherein one of the pair of expansion sleeves is positioned over each of the first end and second end of the axle. A locking device is inserted into the channel and engaged with a locking end member. The locking device engages the pair of expansion sleeves causing the expansion sleeves to expand into the mounting cheeks to secure the axle when a first end of the locking device is adjusted.

The locking device comprises a pin having a first and second end that are threaded and locking end members which engage the expansion sleeves on first and second ends of the axle. The locking end member on the second end of the pin has a shaped part that interlocks with a shaped part of the axle to ensure that the locking end member is not rotating during installation and dismounting.

A method of installing a through pin assembly for securing an axle into a pair of mounting cheeks and stabilizing a machine member is disclosed. The method of installing a through pin assembly for securing an axle into a pair of mounting cheeks and stabilizing a machine member comprising: providing a through pin assembly comprising: an axle having a first end and a second end, a channel formed through the axle and running a length of the axle and having a groove formed at each end of the channel as a seat for a seal device to seal a chamber for distribution of a lubricant to the bearing; a bearing mounted on a central section of the axle; a pair of expansion sleeves, wherein one of the pair of expansion sleeves is positioned over each of the first end and second end of the axle; and a locking device inserted into the channel, the locking device engaging the pair of expansion sleeves causing the expansion sleeves to expand into the mounting cheeks and securing the axle when a first end of the locking device is adjusted wherein the locking device comprises: a through pin having at least one of a first end and second end that is threaded; a tension device threaded on the first end of the pin and engages the expansion sleeve on the first end of the axle; a tension washer member having an opening formed through a central area thereof through which the through pin is inserted, the tension washer member engaging the tension device and the expansion sleeve on the first end of the axle; and a locking end member which is threaded on the second end of the through pin and engages the expansion sleeve on the second end of the axle; securing the locking end member to the second end of the pin; fitting one of the pair of expansion sleeves onto the second end of the axle; inserting the pin into the channel formed in the axle; fitting one of the pair of expansion sleeves onto a first end of the axle; fitting the tension washer member onto the first end of the pin; and securing the tensioning device onto the first end of the pin and abutted with the tension washer member, wherein tightening the tensioning device causes the tension washer member and the locking end member to engage the expansion sleeves causing the expansion sleeves to expand and be pressed into a pair of mounting cheeks and securing the machine member.

The present invention is best understood by reference to the following detailed description when read in conjunction with the accompanying drawings.

### BRIEF DESCRIPTION OF THE DRAWINGS

Figure 1 is a perspective view of the bolt assembly used to connect two machine parts;
Figure 2 is an exploded view of the bolt assembly; including an alternative type of through pin; and

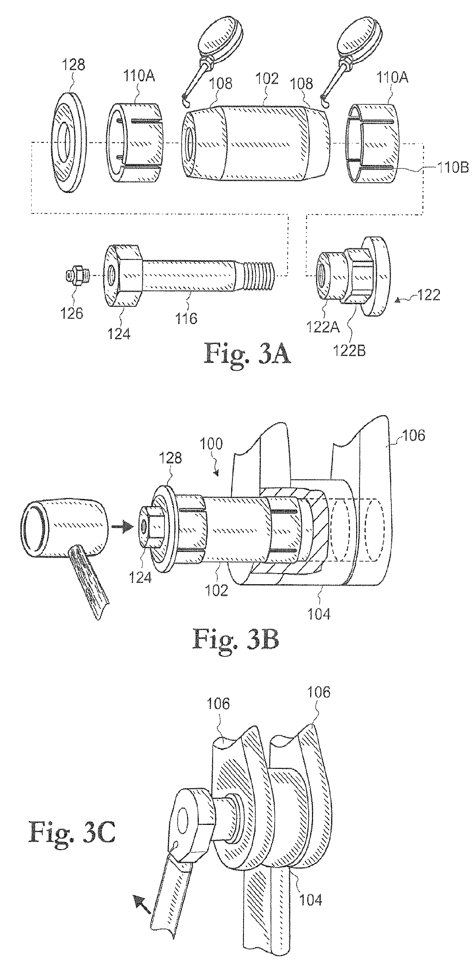

Figure 3A-3C shows a method of installing the bolt assembly of the present invention.

Common reference numerals are used throughout the drawings and detailed descriptions to indicate like elements.

### DETAILED DESCRIPTION

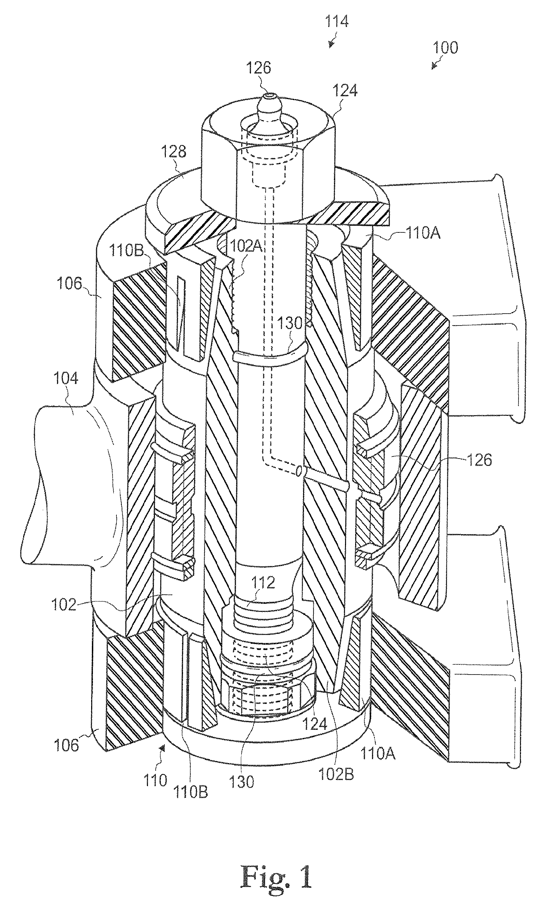

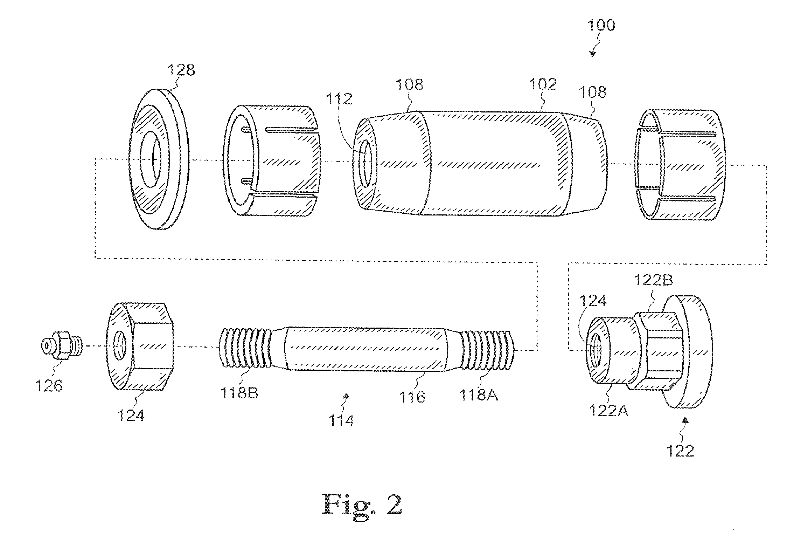

The present invention provides a through pin assembly 100 for locking a shaft or an axle 102 (hereinafter axle) into a pair of mounting cheeks 106 and a machine member 104 where solely one end of the axle 102 need be accessible in order to clamp or lock the through pin assembly 100 into a pair of mounting cheeks 106 and to stabilize the machine member 104. Referring to Figures 1 and 2, the through pin assembly 100 is shown. The through pin assembly 100 is used to lock the axle 102 into a pair of mounting cheeks 106 and to stabilize a machine member 104. In the embodiment shown in Figures 1 and 2, the through pin assembly 100 is connecting and locking into the two mounting lugs 106 and the machine member 104.

The through pin assembly 100 will have an axle 102. A pair of end members 108 is formed on each end of the axle 102. In the embodiment shown in Figures 1 and 2, the end members 108 are tapered so that the distal end of the end members 108 is narrower than the proximal end. However, this is just shown as an example. The end members 108 may be cylindrical in shape as will be discussed below. A channel 112 is formed in the axle 102. The channel 112 runs a length of the axle 102. Located on a central cylindrical part of the axle 102 is an inner race of a bearing 126. The bearing 126 may be press fitted or the like.

In the embodiment depicted in Figures 1 and 2, a pair of expansion sleeves 110 is provided. Each expansion sleeve 110 has a housing 110A. In accordance with one embodiment of the present invention, the housing 110A is cylindrical in shape while the end member 108 of the through pin assembly 100 is conical.

Each housing 110A is hollow and has a pair of open ends. A plurality of slots 110B is formed in the housing 110A and goes through the housing 110A into the hollow section of the housing 110A. The slots 110B generally run along a length of the housing 110A. At least one of the pluralities of slots 110B will run an entire length of the housing 110A. The slots 110B act as annular wedges, with the apex pointing towards the central section of the axle 102. The number of slots 110B formed in the housing 110A is based on the diameter of the housing 110A. The larger the diameter of the housing 110A the more slots 110B are generally needed. In general, four to six slots 110B are formed in each housing 110A. The slots 110B will run vertically down the side of the housing 110. One slot 110B may run the length of the housing 110. The housing 110 is generally made of a sturdy metallic material. In accordance with one embodiment of the present invention, a treated yellow chrome oxide is used to cover the housing

The expansion sleeves 110 are used for anchoring of the axle 102 in the respective mounting cheeks 106. This is accomplished by causing the respective expansion sleeves 110 to expand over the end members 108 of the axle 102 by means of a locking device 114. The locking device 114 applies, via the tension washer 128, pressure on the expansion sleeves 110. The slots 110B in the expansion sleeves 110 allow the expansion sleeves 110 to expand and press against the interior walls of the mounting cheeks 106. The locking device 114 will secure the axle 102 into mounting cheeks 106 and stabilize the machine member 104 and only requires one end of the axle 102 to be accessible in order to secure the axle 102 into mounting cheeks 106 and stabilizing the machine member 104.

The locking device 114 has a pin 116. One end of the pin 116 will have threads 118A. The other end of the pin 116 is screw-threaded 118B and carries a tensioning nut 124 and a grease nipple 126. When inserted into the channel 112, the pin 116 will extend coaxially through the channel 112 of the axle 102.

A locking end member 122 is secured to the end of the pin 116 having threads 118A. The locking end member 122 is threaded in the central area 124 and consists of a cylindrical head member 122A and a hexagon, octagon or otherwise shaped member 122B to form a mushroom-headed end member 122. The threads 118 of the pin 116 will engage the threaded channel 124 formed in the locking end member 122. The hexagon, octagon or otherwise shaped part 122B of the locking end member 122 interlocks with the hexagon, octagon or otherwise shaped part 124 of the axle 102, to ensure that the locking end member 122 is not rotating during installation or removal. The locking end member 122 is also used to apply pressure to one of the pair of expansion sleeves 110 in order to cause the expansion sleeves 110 to expand and press against the interior walls of the mounting cheeks 106.

A tension washer member 128 may also be provided. The tension washer member 128 has an opening formed through a central area thereof through which the pin 116 is inserted. The tension washer member 128 is positioned so that a smooth side of the tension washer member 128 faces towards the expansion sleeve 110 as will be discussed below. The tension washer member 128 is used to apply pressure to one of the pair of expansion sleeves 110 in order to cause the expansion sleeves 110 to expand and press against the interior walls of the mounting cheeks 106. The tension washer member 128 is designed in a strong metal with properties allowing a static tension to be built up, and kept, between the head of the pin 116 and the threads 124 inside the locking end member 122.

In operation, the axle 102 is locked into the interior walls of the mounting cheeks 106 in the following manner. The locking end member 122 is secured to the through pin 116. This is done by having the threads 118A of the through pin 116 engage the threaded channel 124 formed in the cylindrical head member 122A and the hexagon, octagon or otherwise shaped part 122B of the locking end member 122. One of the expansion sleeves 110 is fitted onto the second end 102B of the axle 102. The pin 116 is then inserted into the channel 112 formed in the axle 102 with two grooves 130 in the channel, one at each end, as a seat for o-rings to seal off a grease or oil chamber for distribution to the bearing. The second of the pair of expansion sleeves 110 is then fitted onto the first end 102A of the axle 102. The tension washer member 128 is then fitted onto the pin 116 and the tensioning nut 124 is screwed onto the pin 116 and into abutment with the tension washer member 128. When tightening of the tensioning nut 124 is continued, the force generated thereby will cause the expansion sleeves 110 to expand so as to be pressed into the two mounting cheeks 106 stabilizing the machine member 104 and therewith locking the axle 102 to the mounting cheeks 106. The grease nipple 126 is then screwed into the tensioning nut 124.

This disclosure provides exemplary embodiments of the present invention. The scope of the present invention is not limited by these exemplary embodiments. Numerous variations, whether explicitly provided for by the specification or implied by the specification, such as variations in structure, dimension, type of material and manufacturing process may be implemented by one of skill in the art in view of this disclosure.

## Claims

1. A through pin assembly (100) for securing an axle to a pair of mounting cheeks (106) and stabilizing a machine member (104), comprising:
an axle (102) having a first end (102A) and a second end (102B), a channel (112) formed through the axle (102) and running a length of the axle (102);
a bearing mounted on a central section of the axle (102);
a pair of expansion sleeves (110), wherein one of the pair of expansion sleeves (110) is positioned over each of the first end (102A) and second end (102B) of the axle (102); and
a locking device (114) inserted into the channel (112), the locking device (114) engaging the pair of expansion sleeves (110) causing the expansion sleeves (110) to expand into the mounting cheeks (106) to secure the axle (102) when a first end of the locking device (114) is adjusted,
wherein the locking device (114) comprises:
a pin (116) having a first end (118B)
that is threaded and a second end (118A);
a tension device (124) threaded on the first end (118B) of the through pin (116) and which engages the expansion sleeve (110) on the first end (102A) of the axle (102); and
a locking end member (122) which engages the expansion sleeve (110A) on the second end (102B) of the axle (102);
wherein the expansion sleeves (110) on the first end (102A) and the second end (102B) of the axle (102) expand into the pair of mounting cheeks (106) to secure the axle (102) when the tension device (124) is adjusted,
**characterized in that** the locking end member (122) is threaded on the second end (118A) of the pin (116) and has a shaped part (122B) that interlocks with a shaped part (124) of the axle (102) to ensure that the locking end member (122) is not rotating during installation and dismounting; and the channel (112) formed through the axle (102) and running a length of the axle (102) has a groove (130) formed in each end of the channel (112) as a seat for a gasket to seal off a lubrication chamber for distribution to the bearing.

2. A through pin assembly (100) in accordance with Claim 1 wherein a pair of end members (108) is formed on each end (102A, 102B) of the axle (102), and wherein the pair of end members (108) are tapered so that a distal end of each end member (108) is narrower than a proximal end of each end member (108).

3. A through pin assembly (100) in accordance with Claim 2 wherein each of the pair of expansion sleeves (110) is cylindrical in shape.

4. A through pin assembly (100) in accordance with any one of Claims 1-3 wherein each of the pair of expansion sleeves (110) comprises:
a housing (1110A) having a hollow interior and pair of open ends; and
a plurality of slots (110B) running along a length of the housing (110A).

5. A through pin assembly (100) in accordance with Claim 4 wherein the plurality of slots (110B) extend through the housing (110A) into the hollow interior.

6. A through pin assembly (100) in accordance with Claim 4 or Claim 5 wherein at least one of the plurality of slots (110B) runs an entire length of housing (110A) and into the hollow interior.

7. A through pin assembly (100) in accordance with any one of Claims 1-6 further comprising a tension washer member (128) having an opening formed through a central area thereof through which the pin (116) is inserted, the tension washer member (128) engaging the tension device (124) and the expansion sleeves (110) on both ends of the axle (102).

8. A through pin assembly (100) in accordance with Claim 7 wherein the tension washer member (128) is positioned so that a smooth side of the tension washer member (128) faces towards the expansion sleeve (110) on the first end (102A) of the axle (102).

9. A through pin assembly (100) in accordance with any one of Claims 1-8 further comprising a grease nipple (126) rotatably coupled to the tension device (124).

## Patentansprüche

1. Durchgangsstiftanordnung (100) zum Fixieren einer Achse an einem Paar an Befestigungsseitenstücken (106) und zum Stabilisieren eines Maschinenelements (104), aufweisend:
eine Achse (102), aufweisend ein erstes Ende (102A) und ein zweites Ende (102B), wobei ein Kanal (112) durch die Achse (102) ausgebildet ist und entlang einer Länge der Achse (102) verläuft;
ein Lager, welches auf einem Zentralbereich der Achse (102) angebracht ist;
ein Paar von Expansionshülsen (110), wobei ein Teil des Paares von Expansionshülsen (110) jeweils über dem ersten Ende (102A) und dem weiten Ende (102B) der Achse (102) angeordnet ist; und
eine Sicherungsvorrichtung (114), eingeführt in den Kanal (112), wobei die Sicherungsvorrichtung (114) in das Paar von Expansionshülsen (110) eingreift, was ein Ausdehnen der Expansionshülsen (110) in die Befestigungsseitenstücke (106) verursacht, um die Achse (102) zu sichern, wenn ein erstes Ende der Sicherungsvorrichtung (114) eingestellt wird,
wobei die Sicherungsvorrichtung (114) aufweist:
einen Stift (116), aufweisend ein erstes Ende (118B), welches geschraubt ist, und ein zweites Ende (118A);
eine Spannungsvorrichtung (124), welche auf das erste Ende (118B) des Durchgangsstiftes (116) geschraubt ist, und an dem ersten Ende (102A) der Achse (102) in die Expansionshülse (110) eingreift; und
ein Sicherungsendelement (122), welches auf dem zweiten Ende (102B) der Achse (102) in die Expansionshülse (110A) eingreift;
wobei sich die Expansionshülsen (110) an dem ersten Ende (102A) und an dem zweiten Ende (102B) der Achse (102) in Befestigungsseitenstücke (106) erstecken, um die Achse (102) zu fixieren, wenn die Spannungsvorrichtung (124) eingestellt wird,
**dadurch gekennzeichnet, dass**
das Sicherungsendelement (122) auf das zweite Ende (118A) des Stifts (116) geschraubt ist und einen geformten Teil (122B) aufweist, der mit einem geformten Teil (124) der Achse (102) ineinandergreift, um sicherzustellen, dass sich das Sicherungsendelement (122) während der Montage und des Demontierens nicht dreht; und
der Kanal (112), welcher durch die Achse (102) ausgebildet ist und entlang einer Länge der Achse (102) verläuft, eine Aussparung (130) aufweist, welche in jedem Ende des Kanals (112) als Aufnahme für eine Dichtung ausgebildet ist, um eine zum Ausgeben an das Lager ausgestaltete Schmiermittelkammer abzudichten.

2. Durchgangsstiftanordnung (100) gemäß Anspruch 1, wobei ein Paar von Endelementen (108) an jedem Ende (102A, 102B) der Achse (102) ausgebildet ist, und wobei das Paar von Endelementen (108) kegelförmig ist, so dass ein distales Ende jedes Endelements (108) schmaler ist als ein proximales Ende jedes Endelements (108).

3. Durchgangstiftanordnung (100) gemäß Anspruch 2, wobei jeder Teil von dem Paar der Expansionshülsen (110) zylinderförmig ist.

4. Durchgangstiftanordnung (100) gemäß einem der Ansprüche 1-3, wobei jeder Teil von dem Paar der Expansionshülsen (110) aufweist:
ein Gehäuse (110A), aufweisend einen hohlen Innenbereich und ein Paar an offenen Enden; und
eine Vielzahl an Schlitzen (110B), welche entlang einer Länge des Gehäuses (110A) verlaufen.

5. Durchgangstiftanordnung (100) gemäß Anspruch 4, wobei sich die Vielzahl an Schlitzen (110B) durch das Gehäuse (110A) in den hohlen Innenbereich erstreckt.

6. Durchgangstiftanordnung (100) gemäß Anspruch 4 oder Anspruch 5, wobei zumindest ein Teil der Vielzahl an Schlitzen (110B) durch die gesamte Länge des Gehäuses (110A) und in den hohlen Innenbereich verläuft.

7. Durchgangstiftanordnung (100) gemäß einem der Ansprüche 1-6, ferner aufweisend ein Spannungsscheibenelement (128), welches eine im Zentralbereich darin ausgebildete Öffnung aufweist, durch welche der Stift (116) eingeführt ist, wobei das Spannungsscheibenelement (128) an beiden Enden der Achse (102) in die Spannungsvorrichtung (124) und in die Expansionsvorrichtung (110) eingreift.

8. Durchgangstiftanordnung (100) gemäß Anspruch 7, wobei das Spannungsscheibenelement (128) so angeordnet ist, dass eine glatte Seite des Spannungsscheibenelements (128) der Expansionshülsen (110) an dem ersten Ende (102A) der Achse (102) zugewandt ist.

9. Durchgangstiftanordnung (100) gemäß einem der Ansprüche 1-8, ferner aufweisend einen Schmiernippel (126), welcher drehbar an die Spannungsvorrichtung (124) gekoppelt ist.

## Revendications

1. Ensemble broche traversante (100) pour fixer un essieu à une paire de mâchoires de montage (106) et stabiliser un élément de machine (104), comprenant :
un essieu (102) ayant une première extrémité (102A) et une seconde extrémité (102B), un canal (112) formé à travers l'essieu (102) et parcourant une longueur de l'essieu (102) ;
un palier monté sur une section centrale de l'essieu (102) ;
une paire de manchons de dilatation (110), dans laquelle un manchon de la paire de manchons de dilatation (110) est positionné sur chacune des première extrémité (102A) et seconde extrémité (102B) de l'essieu (102) ; et
un dispositif de verrouillage (114) inséré dans le canal (112), le dispositif de verrouillage (114) entrant en prise avec la paire de manchons de dilatation (110), amenant les manchons de dilatation (110) à se dilater à l'intérieur des mâchoires de montage (106) pour fixer l'essieu (102) lorsqu'une première extrémité du dispositif de verrouillage (114) est ajustée,
dans lequel le dispositif de verrouillage (114) comprend :
une broche (116) ayant une première extrémité (118B) qui est filetée et une seconde extrémité (118A) ;
un dispositif tendeur (124) vissé sur la première extrémité (118B) de la broche traversante (116) et qui entre en prise avec le manchon de dilatation (110) sur la première extrémité (102A) de l'essieu (102) ; et
un élément d'extrémité de verrouillage (122) qui entre en prise avec le manchon de dilatation (110A) sur la seconde extrémité (102B) de l'essieu (102) ;
dans lequel les manchons de dilatation (110) sur la première extrémité (102A) et la seconde extrémité (102B) de l'essieu (102) se dilatent à l'intérieur de la paire de mâchoires de montage (106) pour fixer l'essieu (102) lorsque le dispositif tendeur (124) est ajusté,
**caractérisé en ce que**
l'élément d'extrémité de verrouillage (122) est vissé sur la seconde extrémité (118A) de la broche (116) et a une pièce formée (122B) qui s'enclenche avec une pièce formée (124) de l'essieu (102) pour garantir que l'élément d'extrémité de verrouillage (122) ne tourne pas pendant l'installation et le démontage ; et le canal (112) formé à travers l'essieu (102) et parcourant une longueur de l'essieu (102) a une rainure (130) formée dans chaque extrémité du canal (112) en tant que siège pour un joint d'étanchéité pour fermer hermétiquement une chambre de lubrification pour une distribution vers le palier.

2. Ensemble broche traversante (100) selon la revendication 1, dans lequel une paire d'éléments d'extrémité (108) est formée sur chaque extrémité (102A, 102B) de l'essieu (102), et dans lequel la paire d'éléments d'extrémité (108) sont coniques de sorte qu'une extrémité distale de chaque élément d'extrémité (108) est plus étroite qu'une extrémité proximale de chaque élément d'extrémité (108).

3. Ensemble broche traversante (100) selon la revendication 2, dans lequel chaque manchon de la paire de manchons de dilatation (110) est de forme cylindrique.

4. Ensemble broche traversante (100) selon l'une quelconque des revendications 1 à 3, dans lequel chaque manchon de la paire de manchons de dilatation (110) comprend :
un logement (110A) ayant un intérieur creux et une paire d'extrémités ouvertes ; et
une pluralité de fentes (110B) parcourant le long d'une longueur du logement (110A).

5. Ensemble broche traversante (100) selon la revendication 4, dans lequel la pluralité de fentes (110B) s'étend à travers le logement (110A) jusque dans l'intérieur creux.

6. Ensemble broche traversante (100) selon la revendication 4 ou 5, dans lequel au moins une parmi la pluralité de fentes (110B) parcourt toute une longueur de logement (110A) et pénètre dans l'intérieur creux.

7. Ensemble broche traversante (100) selon l'une quelconque des revendications 1 à 6, comprenant en outre un élément de rondelle de tension (128) ayant une ouverture formée à travers une zone centrale de celuici, à travers laquelle la broche (116) est insérée, l'élément de rondelle de tension (128) entrant en prise avec le dispositif tendeur (124) et les manchons de dilatation (110) aux deux extrémités de l'essieu (102).

8. Ensemble broche traversante (100) selon la revendication 7, dans lequel l'élément de rondelle de tension (128) est positionné de sorte qu'un côté lisse de l'élément de rondelle de tension (128) est tourné vers le manchon de dilatation (110) sur la première extrémité (102A) de l'essieu (102).

9. Ensemble broche traversante (100) selon l'une quelconque des revendications 1 à 8, comprenant en outre un embout de graissage (126) couplé de manière rotative au dispositif tendeur (124).
